(19) Europäisches Patentamt
European Patent Office
Office européen des brevets

(11) EP 4 495 179 A1

(12) **EUROPEAN PATENT APPLICATION**
published in accordance with Art. 153(4) EPC

(43) Date of publication:
**22.01.2025 Bulletin 2025/04**

(21) Application number: **23780154.3**

(22) Date of filing: **24.03.2023**

(51) International Patent Classification (IPC):
***C08L 11/02*** *(2006.01)* ***C08F 36/18*** *(2006.01)*
***C08F 236/18*** *(2006.01)*

(52) Cooperative Patent Classification (CPC):
**C08F 36/18; C08F 236/18; C08L 11/02**

(86) International application number:
**PCT/JP2023/011785**

(87) International publication number:
**WO 2023/190144 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022059377**

(71) Applicant: **Denka Company Limited**
**Tokyo 103-8338 (JP)**

(72) Inventors:
- **KUMAGAI, Yushi**
  **Tokyo 103-8338 (JP)**
- **ITO, Misaki**
  **Tokyo 103-8338 (JP)**

(74) Representative: **Gulde & Partner**
**Patent- und Rechtsanwaltskanzlei mbB**
**Berliner Freiheit 2**
**10785 Berlin (DE)**

(54) **CHLOROPRENE POLYMER AND DIP-MOLDED PRODUCT**

(57) The present invention aims to provide a chloroprene-based polymer capable of obtaining a dip-molded product having high tensile strength at cut, a low modulus at 100% elongation, and an excellent texture.

According to the present invention, provided is a chloroprene-based polymer, wherein a film containing the chloroprene-based polymer has a loss tangent tan δ in a 10 Hz frequency region of 0.08 to 0.14, obtained by tensile dynamic viscoelasticity measurement in accordance with a non-resonant forced vibration method, under conditions of a temperature of 25°C and a strain of 0.75%, and the film is obtained by drying a chloroprene-based polymer latex containing the chloroprene-based polymer at 23°C for 3 days.

EP 4 495 179 A1

## Description

### Technical Field

This invention relates to a chloroprene-based polymer and a dip-molded product.

### Background Art

Chloroprene-based polymers are known as materials for dip-molded products such as medical surgical gloves, medical examination gloves, industrial gloves, balloons, catheters, and rubber boots.

Various techniques have been proposed for chloroprene polymer latex and chloroprene polymer dip-molded products for dip-molded product applications related to improving the flexibility of chloroprene polymers. Regarding dip-molded product applications, Patent Literature 1 describes a polychloroprene latex with a pH of 7 to 14, which contains 100 parts by mass of modified polychloroprene obtained by copolymerizing chloroprene and methacrylic acid, 90 to 150 parts by mass of water, 1 to 5 parts by mass of emulsifier, 0.5 to 2.5 parts by mass of potassium ion. Regarding dip-molded product applications, Patent Literature 2 describes a mercaptan modified polychloroprene latex, for which chloroprene and 2,3-dichloro-1,3-butadiene are copolymerized, and in the 13C-solid NMR spectrum of polychloroprene, a peak area (A) at 126.2 to 127.6 ppm, a peak area (B) at 122.0 to 126.2 ppm, and a peak area (C) at 129.9 to 130.3 ppm are within the range shown by the following general formula (I). Regarding dip-molded product applications, Patent Literature 3 describes a chloroprene polymer latex that can achieve both excellent flexibility and mechanical properties in a vulcanized rubber produced by dip-molding by containing a high molecular weight substance and a low molecular weight substance. Patent Literature 4 describes chloroprene polymer latex that exhibits excellent flexibility and mechanical properties even under mild vulcanization conditions by copolymerizing chloroprene monomer and isoprene monomer, the raw material of isoprene rubber. Patent Literature 5 describes a dip-molded product of chloroprene-based polymer latex that exhibits excellent flexibility even without a vulcanization accelerator by mixing chloroprene-based polymer latex and isoprene-based polymer latex. Patent Literature 6 describes a dip-molded product of chloroprene-based polymer latex that exhibits excellent mechanical properties by mixing nitrile butadiene-based polymer (NBR) latex or isoprene-based polymer latex in a base of chloroprene-based polymer latex.

$$\frac{4.0}{100} \leqq \frac{A}{B-C} \leqq \frac{5.8}{100} \quad \cdots \text{(I)}$$

### Citation List

### Patent Literature

Patent Literature 1: JP-A-2014-114342
Patent Literature 2: WO2019/009038
Patent Literature 3: JP-A-2019-143002
Patent Literature 4: WO2021/132460
Patent Literature 5: JP-A-2017-508840
Patent Literature 6: JP-A-2020-189963

### Summary of Invention

### Technical Problem

Chloroprene-based polymers are used as materials for dip-molded products, such as medical surgical gloves, medical examination gloves, industrial gloves, balloons, catheters, and rubber boots. In particular, for medical rubber glove applications, there is a need for chloroprene-based polymers capable of obtaining dip-molded products having high tensile strength at cut, a low modulus at 100% elongation, and an excellent texture.

The present invention has been made in view of such a circumstance, and aims to provide a chloroprene-based polymer capable of obtaining a dip-molded product having high tensile strength at cut, a low modulus at 100% elongation, and an excellent texture.

## Solution to Problem

According to the present invention, provided is a chloroprene-based polymer wherein a film containing the chloroprene-based polymer has a loss tangent tan δ in a 10 Hz frequency region of 0.080 to 0.140, obtained by tensile dynamic viscoelasticity measurement in accordance with a non-resonant forced vibration method, under conditions of a temperature of 25°C and a strain of 0.75%, and the film is obtained by drying a chloroprene-based polymer latex containing the chloroprene-based polymer at 23°C for 3 days.

The inventors have made a diligent study, and found that by controlling the loss tangent tan δ in the 10 Hz frequency region of a film containing a chloroprene-based polymer, which is obtained by measuring tensile dynamic viscoelasticity according to a non-resonant forced vibration method under conditions of a temperature of 25°C and a strain of 0.75%, to a specific value, the chloroprene-based polymer can give a dip-molded product having high tensile strength at cut, a low modulus at 100% elongation, and an excellent texture. This finding led to completion of the present invention.

Hereinafter, various embodiments of the present invention are exemplified. The embodiments shown below can be combined with each other.

Preferably, the chloroprene-based polymer described above, wherein a peak with a weight average molecular weight of 5,000 to 80,000 is detected, when the tetrahydrofuran-soluble content of the chloroprene-based polymer is measured by gel permeation chromatography.

Preferably, the chloroprene-based polymer described above, wherein the chloroprene-based polymer contains a monomer unit derived from 2,3-dichloro-1,3-butadinene.

According to another aspect of the present invention, provided is a dip-molded product containing the chloroprene-based polymer described above.

Preferably, the dip-molded product described above, wherein the dip-molded product is an industrial or general household glove, a medical glove, a balloon, a catheter, or a boot.

## Effects of Invention

According to the chloroprene-based polymer of the present invention, a dip-molded product can be obtained having high tensile strength at cut, a low modulus at 100% elongation, and an excellent texture.

## Description of Embodiments

Hereinafter, the present invention will be described in detail by exemplifying the embodiments of the present invention. The present invention is not limited by these descriptions. The features of the embodiments of the present invention shown below can be combined with each other. In addition, each feature can be an independent invention.

### 1. Chloroprene-based Polymer

The chloroprene-based polymer of the present invention is a polymer containing a monomer unit derived from 2-chloro-1,3-butadiene (hereinafter also referred to as chloroprene). In addition, the chloroprene-based polymer of one embodiment of the present invention can also be a copolymer of chloroprene and other monomers copolymerizable with chloroprene. Examples of other monomers include 1-chloro-1,3-butadiene, 2,3-dichloro-1,3-butadiene, isoprene, styrene, methacrylic acid, acrylonitrile, sulfur, and the like. As other monomers, two or more types of these may be used in combination. The chloroprene-based polymer of one embodiment of the present invention preferably contains a monomer unit derived from 2,3-dichloro-1,3-butadiene. The chloroprene-based polymer of one embodiment of the present invention may not contain sulfur, and the chloroprene-based polymer of one embodiment of the present invention may not have an -S-S-structure caused by sulfur in the main chain.

The chloroprene-based polymer according to one embodiment of the present invention may be obtained by mixing two or more different chloroprene-based polymers. The chloroprene-based polymer preferably contains at least one selected from the group consisting of a homopolymer of chloroprene (2-chloro-1,3-butadiene), a copolymer of chloroprene and 1-chloro-1,3-butadiene, a copolymer of chloroprene and 2,3-dichloro-1,3-butadiene, and a copolymer of chloroprene, 1-chloro-1,3-butadiene and 2,3-dichloro-1,3-butadiene, and more preferably contains at least one of a homopolymer of chloroprene and a copolymer of chloroprene and 2,3-dichloro-1,3-butadiene.

The chloroprene-based polymer according to one embodiment of the present invention can contain 50 to 100% by mass, preferably 70 to 100% by mass of monomer unit derived from chloroprene, when the chloroprene-based polymer contained in the chloroprene-based polymer latex composition is 100% by mass. The content of monomer unit derived from chloroprene is, for example, 50, 55, 60, 65, 70, 75, 80, 85, 90, 91, 92, 93, 94, 95, 96, 97, 98, 99, or 100% by mass, and may be in the range between the two values exemplified herein.

The chloroprene-based polymer according to one embodiment of the present invention can contain 0 to 30% by

mass of monomer unit derived from 2,3-dichloro-1,3-butadiene, when the chloroprene-based polymer contained in the chloroprene-based polymer latex composition is 100% by mass. The content of monomer unit derived from 2,3-dichloro-1,3-butadiene is, for example, 0, 1, 2, 3, 4, 5, 6, 7, 8, 9, 10, 11, 12, 13, 14, 15, 16, 17, 18, 19, 20, 21, 22,23, 24, 25, 26, 27, 28, 29, or 30% by mass, and may be in the range between the two values exemplified herein.

The chloroprene-based polymer according to one embodiment of the present invention may also contain a monomer unit derived from chloroprene and a monomer unit derived from 2,3-dichloro-1,3-butadiene. In this case, the chloroprene-based polymer preferably contains 0 to 30% by mass, more preferably 5 to 25% by mass of monomer unit derived from 2,3-dichloro-1,3-butadiene, when the total of monomer unit derived from chloroprene and monomer unit derived from 2,3-dichloro-1,3-butadiene contained in the chloroprene-based polymer is 100% by mass.

In addition, when the chloroprene-based polymer is a mixture of two or more different chloroprene-based polymers, the content of each monomer unit means the total of each monomer unit in all chloroprene-based polymers contained in the chloroprene-based polymer latex composition.

In the chloroprene-based polymer according to one embodiment of the present invention, the content of the sulfur-modified chloroprene-based polymer contained in the chloroprene-based polymer latex composition is preferably 20% by mass or less, when the chloroprene-based polymer contained in the chloroprene-based polymer latex composition is 100% by mass. The content of the sulfur-modified chloroprene-based polymer is, for example, 0, 1, 2, 3, 4, 5, 6, 7, 8, 9, 10, 11, 12, 13, 14, 15, 16, 17, 18, 19, or 20% by mass, and may be in the range between the two values exemplified herein. The chloroprene-based polymer according to one embodiment of the present invention may not contain a sulfur-modified chloroprene-based polymer.

The chloroprene-based polymer of the present invention has a loss tangent tan δ in a frequency range of 10 Hz of a film containing the chloroprene-based polymer, which is obtained by tensile dynamic viscoelasticity measurement in accordance with a non-resonant forced vibration method under conditions of a temperature of 25°C and a strain of 0.75%, and is 0.080 to 0.140, preferably 0.090 to 0.140, and more preferably 0.100 to 0.140. The loss tangent tan δ in a frequency range of 10 Hz is, for example, 0.080, 0.085, 0.090, 0.095, 0.100, 0.105, 0.110, 0.115, 0.120, 0.125, 0.130, 0.135, or 0.140, and may be in the range between the two values exemplified herein.

Here, the film containing the chloroprene-based polymer is obtained by drying the chloroprene-based polymer latex containing the chloroprene-based polymer at 23°C for 3 days. As an example, the chloroprene-based polymer latex containing the chloroprene-based polymer is poured into a steel metal frame to a thickness of about 1.5 mm, and left to stand at 23°C for 3 days to evaporate volatiles to obtain a dried sheet, which can be used as a film containing the chloroprene-based polymer. In other words, the film containing the chloroprene-based polymer is made by removing water from the chloroprene-based polymer latex containing the chloroprene-based polymer at room temperature, and the film containing the chloroprene-based polymer is not subjected to a heat treatment at a temperature that causes cross-linking or vulcanization reaction of the chloroprene-based polymer. The chloroprene-based polymer contained in the film can have no thermal history of, for example, 100°C or higher after the polymerization is completed. Preferably, the film has no thermal history of 80°C or higher, more preferably the film has no thermal history of 60°C or higher.

The film containing the chloroprene-based polymer may have components that the chloroprene-based polymer latex can contain. The chloroprene-based polymer latex will be described later.

The film containing the chloroprene-based polymer may contain the chloroprene-based polymer as a main component, and may contain 70% by mass or more of the chloroprene-based polymer, preferably 80% by mass or more, and more preferably 90% by mass or more, of the film taken as 100% by mass. When the film is taken as 100% by mass, the content ratio of the chloroprene-based polymer is, for example, 70, 75, 80, 85, 90, 95, 96, 97, or 98% by mass, and may be in the range between the two values exemplified herein.

The thickness of the film containing the chloroprene-based polymer may be 0.5 to 1.5 mm. The thickness of the film containing the chloroprene-based polymer may be, for example, 0.5, 0.6, 0.7, 0.8, 0.9, 1.0, 1.1, 1.2, 1.3, 1.4, 1.5 mm, and may be in the range between the two values exemplified herein. The thickness of the film containing the chloroprene-based polymer can be adjusted by the solid concentration of the chloroprene-based polymer latex.

Tensile-type dynamic viscoelasticity measurements in accordance with the non-resonant forced vibration method can be performed by cutting a film containing the chloroprene-based polymer described above to prepare a strip-shaped test piece (width: 4.5 mm, length: 30 mm, thickness: 0.80 to 0.90 mm), and by using the obtained strip-shaped test piece. The measurement conditions can be set as a static tension of 5 gf, a temperature of 25°C, a strain of 0.75%, and a chuck interval of 20 mm, and can be specifically measured by the method described in the Examples.

By setting a loss tangent tan δ in the frequency 10 Hz region to a specific value range, the chloroprene-based polymer of the present invention becomes a chloroprene-based polymer which gives a dip-molded product having high tensile strength at cut, a low modulus at 100% elongation, and an excellent texture.

The loss tangent tan δ in the 10 Hz frequency range can be controlled by adjusting the type and amount of raw material blend, the type and amount of chemicals used, and the polymerization conditions (for example, polymerization temperature and whether or not raw material monomers are added separately in the polymerization process) when polymerizing the chloroprene-based polymer, and by adjusting the type and amount of monomer units contained in the

obtained chloroprene-based polymer, as well as the weight average molecular weight and the mixing ratio of the chloroprene-based polymer.

The chloroprene-based polymer of an embodiment of the present invention preferably has a peak with a weight average molecular weight of 5,000 to 80,000, in the molecular weight distribution obtained by gel permeation chromatography measurement of the sol content soluble in tetrahydrofuran in the chloroprene-based polymer. Peak positions for peaks detected in the range of 5,000 to 80,000 weight average molecular weight are, for example, 5,000, 6,000, 7,000, 8,000, 9,000, 10,000, 11,000, 12,000, 13,000, 14,000, 15,000, 16,000, 17,000, 18,000, 19,000, 20,000, 21,000, 22,000, 23,000, 24,000, 25,000, 26,000, 27,000, 28,000, 29,000, 30,000, 35,000, 40,000, 50,000, 60,000, 70,000, or 80,000, and may be in the range between the two values exemplified herein.

The chloroprene-based polymer of an embodiment of the present invention can be a mixture of two or more different chloroprene-based polymers, and preferably contains a chloroprene-based polymer with a weight average molecular weight of 5,000 to 80,000.

The chloroprene-based polymer of an embodiment of the present invention may further contain a chloroprene-based polymer with a weight average molecular weight of 200,000 to 1,500,000. **In** other words, the chloroprene-based polymer of one embodiment of the present invention may have a peak with a weight average molecular weight of 200,000 to 1,500,000 detected in the molecular weight distribution obtained by gel permeation chromatography measurement of the sol content soluble in tetrahydrofuran in the chloroprene-based polymer. The peak positions of the peaks detected in the range of 200,000 to 1,500,000 of the weight average molecular weight are, for example, 200,000, 300,000, 400,000, 500,000, 600,000, 700,000, 800,000, 900,000, 1,000,000, 1,100,000, 1,200,000, 1,300,000, 1,400,000, or 1,500,000 and may be in the range between the two values exemplified herein.

The molecular weight distribution of the sol content soluble in tetrahydrofuran in the chloroprene-based polymer can be obtained by measuring the weight average molecular weight using gel permeation chromatography (GPC). Measurement conditions for GPC can be as described in the Examples. The weight average molecular weight of the chloroprene-based polymer can be controlled by adjusting the type and amount of a chain transfer agent, polymerization temperature, polymerization time, and polymerization conversion rate, and the like in the polymerization of each chloroprene-based polymer. In addition, as described below, the loss tangent tan $\delta$ can be adjusted by adjusting the weight average molecular weight of the chloroprene-based polymer and the blending ratio of the chloroprene-based polymer having different weight average molecular weights.

The chloroprene-based polymer of an embodiment of the present invention preferably has a peak with a weight average molecular weight of 5,000 to 80,000, and a peak with a weight average molecular weight of 200,000 to 1,500,000 in the molecular weight distribution obtained by gel permeation chromatography measurement of the sol content soluble in tetrahydrofuran in the chloroprene-based polymer. That is, the chloroprene-based polymer of an embodiment of the present invention preferably contains a chloroprene-based polymer with a weight average molecular weight of 5,000 to 80,000 and a chloroprene-based polymer with a weight average molecular weight of 200,000 to 1,500,000.

The chloroprene-based polymer of an embodiment of the present invention preferably contains 10 to 40% by mass, more preferably 15 to 30% by mass, of a chloroprene-based polymer with a weight average molecular weight of 5,000 to 80,000, when the chloroprene-based polymer is 100% by mass. The chloroprene-based polymer of an embodiment of the present invention may contain, for example, 10, 15, 20, 25, 30, 35, or 40% by mass of a chloroprene-based polymer with a weight average molecular weight of 5,000 to 80,000 when the chloroprene-based polymer is 100% by mass, and may be in the range between the two values exemplified herein.

The chloroprene-based polymer of an embodiment of the present invention preferably contains 60 to 90% by mass, more preferably 70 to 85% by mass, of a chloroprene-based polymer with a weight average molecular weight of 200,000 to 1,500,000, when the chloroprene-based polymer is 100% by mass. The chloroprene-based polymer of an embodiment of the present invention may contain, for example, 60, 65, 70, 75, 80, 85, or 90% by mass of the chloroprene-based polymer with a weight average molecular weight of 200,000 to 1,500,000 when the chloroprene-based polymer is 100% by mass, and may be in the range between the two values exemplified herein.

By adjusting the content ratio of the chloroprene-based polymers with different weight average molecular weights to fall within the above numerical ranges, the loss tangent tan $\delta$ can be adjusted more appropriately.

The chloroprene-based polymer of an embodiment of the present invention preferably has a tensile strength at cut of 17.0 MPa or more, and more preferably 20.0 MPa or more, as measured in accordance with JIS K6251 for the dip-molded product containing the chloroprene-based polymer. The tensile strength at cut is, for example, 17.0, 18.0, 19.0, 20.0, 21.0, 22.0, 23.0, 24.0, 25.0, 26.0, 27.0, 28.0, 29.0, 30.0, 31.0, 32.0, 33.0, 34.0, 35.0, 36.0, 37.0, 38.0, 39.0, or 40.0 MPa, and may be in the range between the two values exemplified herein.

The chloroprene-based polymer of an embodiment of the present invention preferably has a modulus at 100% elongation of 0.70 MPa or less, and more preferably 0.5MPa or less, as measured in accordance with JIS K6251 for the dip-molded product containing the chloroprene-based polymer. The modulus at 100% elongation is, for example, 0.30, 0.35, 0.40, 0.45, 0.50, 0.55, 0.60, 0.65, or 0.70 MPa, and may be in the range between the two values exemplified herein.

Here, the dip-molded product is obtained by forming a chloroprene-based polymer latex composition containing

the chloroprene-based polymer into a dip-molded article by an immersion coagulation method, followed by a heat-drying treatment at 150°C for 60 minutes. The dip-molded product can contain the chloroprene-based polymer as a base polymer, and when the dip-molded product is 100% by mass, it can contain 70% by mass or more of the chloroprene-based polymer, preferably 80% by mass or more, and more preferably 90% by mass or more. When the dip-molded product is 100% by mass, the content ratio of the chloroprene-based polymer in the dip-molded product is, for example, 70, 75, 80, 85, 90, 95, 96, 97, 98, 99, or 100% by mass, and may be in the range between the two values exemplified herein. The dip-molded product can be obtained by the method specifically described in the Examples. The method for measuring the modulus at 100% elongation and the tensile strength at cut can be as described in the Examples.

The modulus at 100% elongation and the tensile strength at cut of the dip-molded product containing the chloroprene-based polymer can be controlled by adjusting the type (weight average molecular weight, type and content of monomer units contained, and the like) and amount of the chloroprene-based polymer contained in the dip-molded product.

2. Chloroprene-based Polymer Latex

The chloroprene-based polymer latex of an embodiment of the present invention contains the chloroprene-based polymer of the present invention. The chloroprene-based polymer latex may be one in which a chloroprene-based polymer is dispersed in water, may be one in which at least one selected from the group consisting of a homopolymer of chloroprene, a copolymer of chloroprene and 1-chloro-1,3-butadiene, a copolymer of chloroprene and 2,3-dichloro-1,3-butadiene, and a copolymer of chloroprene, 1-chloro-1,3-butadiene, and 2,3-dichloro-1,3-butadiene is dispersed in water, and may be one in which a homopolymer of chloroprene, or a copolymer of chloroprene and 2,3-dichloro-1,3-butadiene is dispersed in water.

3. Method for Producing Chloroprene-based Polymer Latex

The method for producing the chloroprene-based polymer latex of an embodiment of the present invention may include a polymerization step of polymerizing a monomer containing chloroprene to obtain a chloroprene-based polymer latex. In addition, the method for producing the chloroprene-based polymer latex may further include a mixing step of mixing two or more types of chloroprene-based polymer latex with different weight average molecular weights.

In the polymerization step, the monomer includes chloroprene, and can also include other monomers copolymerizable with chloroprene. Examples of other monomers copolymerizable with chloroprene include 1-chloro-1,3-butadiene, 2,3-dichloro-1,3-butadiene, isoprene, styrene, methacrylic acid, acrylonitrile, sulfur, and the like. The monomer may also include chloroprene and 2,3-dichloro-1,3-butadiene.

Preferably, the type and charging amount of each monomer is adjusted so that each monomer in the obtained chloroprene-based polymer is within the numerical range described above. As an example, the copolymerization amount of 2,3-dichloro-1,3-butadiene in the chloroprene-based polymer contained in the chloroprene-based polymer latex can also be in the range of 0 to 30% by mass with respect to total 100% by mass of the chloroprene monomer and 2,3-dichloro-1,3-butadiene contained in the chloroprene-based polymer. In this case, the amount of 2,3-dichloro-1,3-butadiene charged before the start of emulsion polymerization is preferably in the range of 0 to 30 parts by mass with respect to total 100 parts by mass of chloroprene monomer and 2,3-dichloro-1,3-butadiene monomer. From the viewpoint of polymerization control, the amount of 2,3-dichloro-1,3-butadiene charged is more preferably 5 to 25 parts by mass with respect to total 100 parts by mass of chloroprene monomer and 2,3-dichloro-1,3-butadiene monomer.

In the polymerization step, all of the raw material monomers to be used in the polymerization step can be charged into the polymerization vessel before the start of polymerization, or at least a portion of the raw material monomers to be used in the polymerization step can be charged into the polymerization vessel before the start of polymerization and the remaining raw material monomer (for example, a portion of chloroprene) can be added after the start of polymerization.

When at least a portion of the raw material monomers are added before the start of polymerization and the remaining raw material monomers are added after the start of polymerization, the remaining raw material monomers, for example, chloroprene, can be added in one or more portions, or can be added continuously at a constant flow rate. As an example, in the polymerization step to obtain a latex containing the chloroprene-based polymer with a weight average molecular weight of 5,000 to 80,000, at least a portion of the raw material monomers can be added in portions.

When producing a chloroprene-based polymer, raw monomers are polymerized by a polymerization method such as emulsion polymerization, solution polymerization, suspension polymerization, or bulk polymerization. Among these polymerization methods, emulsion polymerization is preferred because it has various advantages such as easy control, easy removal of polymer from the polymerization-completed solution and relatively high polymerization rate.

Emulsion polymerization is a type of radical polymerization, in which raw material monomers are introduced into a reaction vessel together with a chain transfer agent, water, an alkali (e.g., metal hydroxide such as potassium hydroxide, sodium hydroxide), an emulsifier (dispersant), a reducing agent (e.g., sodium bisulfite), a polymerization initiator, etc., and

then polymerized.

As the type of chain transfer agent used during emulsion polymerization is not particularly limited, those commonly used in emulsion polymerization of chloroprene can be used. Examples thereof include long chain alkyl mercaptans such as n-dodecyl mercaptan and tert-dodecyl mercaptan, dialkyl xanthogen disulfides such as diisopropyl xanthogen disulfide and diethyl xanthogen disulfide, iodoform, etc. As the chain transfer agent, long chain alkyl mercaptans are preferred, and n-dodecyl mercaptan is more preferred.

By adjusting the type and amount of the chain transfer agent, the weight average molecular weight of the obtained chloroprene-based polymer latex can be adjusted.

As an example, in order to obtain a latex containing the chloroprene-based polymer with a weight average molecular weight of 5,000 to 80,000, that is, in order to obtain a chloroprene-based polymer latex having a peak showing a weight average molecular weight of 5,000 to 80,000 in the molecular weight distribution, it is preferable to set the charging amount of the chain transfer agent before the start of emulsion polymerization to 0.5 to 10.0 parts by mass with respect to 100 parts by mass of a monomer. In this case, the charging amount is, for example, 0.5, 1.0, 2.0, 3.0, 4.0, 5.0, 6.0, 7.0, 8.0, 9.0, or 10.0 parts by mass, and may be in the range between the two values exemplified herein.

As another example, in order to obtain a latex containing the chloroprene-based polymer with a weight average molecular weight of 200,000 or more, preferably with a weight average molecular weight of 200,000 to 1,500,000, that is, in order to obtain a chloroprene-based polymer latex having a peak showing a weight average molecular weight of 200,000 or more, preferably 200,000 to 1,500,000 in the molecular weight distribution, it is preferable to set the charging amount of the chain transfer agent before the start of emulsion polymerization to 0.01 to less than 0.10 part by mass with respect to 100 parts by mass of a monomer (for example, 100 parts by mass in total of chloroprene and 2,3-dichloro-1,3-butadiene). From the viewpoint of obtaining a chloroprene-based polymer latex having a peak showing a weight average molecular weight of 500,000 or more, the charging amount of the chain transfer agent is more preferably 0.02 to 0.05 parts by mass, for example, 0.01, 0.02, 0.03, 0.04, 0.05, 0.06, 0.07, 0.08, 0.09 parts by mass, or less than 0.10 parts by mass, and may be in the range between the two values exemplified herein. When the charging amount of the chain transfer agent, particularly long-chain alkyl mercaptans, is 0.01 parts by mass or more, the flexibility of a dip-molded product obtained by dip molding the obtained chloroprene-based polymer latex is improved, and when the charging amount is less than 0.10 parts by mass, particularly less than 0.05 parts by mass, the tensile strength at cut of a dip-molded product obtained by dip molding the obtained chloroprene-based polymer latex becomes higher.

Examples of the emulsifier include anionic emulsifiers and nonionic emulsifiers. Examples of anionic emulsifiers include fatty acid salts such as beef tallow fatty acid potassium salt, partially hydrogenated beef tallow fatty acid potassium salt, potassium oleate, and sodium oleate; resin acid salts such as potassium rosinate, sodium rosinate, hydrogenated potassium rosinate, and hydrogenated sodium rosinate; alkylbenzene sulfonates such as sodium dodecylbenzenesulfonate; and sodium salt of β-naphthalenesulfonic acid formalin condensate, and the like. Examples of nonionic emulsifiers include polyethylene glycol ester emulsifiers, polyvinyl alcohol, and the like. Among these, anionic emulsifiers are preferred, resinates are preferred, rosin acids including rosin acid and rosin acid salt are preferred, and at least one selected from the group consisting of potassium rosinate and sodium rosinate is more preferred. These emulsifiers can be used alone or in combination of two or more. The amount of emulsifier used is preferably 1.0 to 6.5 parts by mass with respect to 100 parts by mass of monomers.

In particular, the emulsifier used for emulsion polymerization preferably contains an anionic emulsifier, and more preferably contains resin acids, especially rosin acids. By using rosin acids, when blended with base chloroprene-based polymer latex, aggregation of rubber solids and pH fluctuations can be prevented to a higher degree. Rosin acids include disproportionated rosin acids, conjugated resin acids, alkali metal salts of disproportionated rosin acids, and alkali metal salts of conjugated resin acids. Examples of disproportionated rosin acid include sesquiterpenes, 8,5-isopimaric acid, dihydropimaric acid, secodehydroabietic acid, dehydroabietic acid, dihydroabietic acid, deisopropyl dehydroabietic acid, and demethyl dehydroabietic acid. Examples of conjugated resin acid include abietic acid, palustric acid, neoabietic acid and levopimaric acid. From the viewpoint of higher tensile strength at cut of the dip-molded product obtained by dipping from the resulting chloroprene-based polymer latex, it is preferable to use conjugated resin acids, and preferably at least one is selected from the group consisting of abietic acid, palustric acid, neoabietic acid and levopimaric acid.

In the producing method for the chloroprene-based polymer latex of an embodiment of the present invention, in addition to rosin acids, other commonly used emulsifiers and fatty acids can also be used. Other emulsifiers include, for example, preferably anionic emulsifiers, and in addition to the anionic emulsifiers described above, metal salts of aromatic sulfinic acid formalin condensates, sodium dodecylbenzenesulfonate, potassium dodecylbenzenesulfonate, sodium alkyldiphenyl ether sulfonate, potassium alkyldiphenyl ether sulfonate, sodium polyoxyethylene alkyl ether sulfonate, sodium polyoxypropylene alkyl ether sulfonate, potassium polyoxyethylene alkyl ether sulfonate, potassium polyoxypropylene alkyl ether sulfonate, and the like.

The content of anionic emulsifier other than rosin acids is preferably 0.2 to 1.0% by mass with respect to 100% by mass of the chloroprene-based polymer contained in the chloroprene-based polymer latex. Therefore, the amount of anionic emulsifier other than rosin acid charged before the start of emulsion polymerization is preferably within the range of

0.2 to 0.9 parts by mass, with respect to 100 parts by mass of monomers (for example, the total of chloroprene and 2,3-dichloro-1,3-butadiene).

The pH of the aqueous emulsion at the start of emulsion polymerization is preferably 10.5 to 13.5. Aqueous emulsion refers to a mixture solution of a chain transfer agent and monomers (chloroprene, 2,3-dichloro-1,3-butadiene, etc.) immediately before the start of emulsion polymerization, but it also includes cases where the composition changes by adding each component later or adding them in batches. When the pH of the aqueous emulsion at the start of emulsion polymerization is 10.5 or more, the polymerization reaction can be controlled more stably. When the pH is 13.5 or less, excessive increase in viscosity during polymerization is suppressed, and the polymerization reaction can be controlled more stably.

The polymerization temperature for emulsion polymerization is preferably within the range of 5 to 55°C. It is preferable that the temperature is 5°C or higher because the emulsion will not freeze, and if it is 55°C or lower, there will be no evaporation or boiling of the chloroprene monomer.

As the polymerization initiator, potassium persulfate, benzoyl peroxide, ammonium persulfate, hydrogen peroxide, etc. used in normal radical polymerization can be used.

The polymerization conversion rate is preferably in the range of 50 to 95%. The polymerization reaction is stopped by adding a polymerization terminator. When the polymerization conversion rate is 50% or more, the tensile strength at cut of the obtained dip-molded coating tends to increase. It is also advantageous in terms of production costs. When the polymerization conversion rate is less than 95%, a decrease in polymerization reactivity due to a decrease in unreacted monomers can be avoided, and a decrease in productivity can also be avoided.

Examples of the polymerization terminator include diethylhydroxylamine, thiodiphenylamine, 4-tert-butylcatechol, 2,2'-methylenebis-4-methyl-6-tert-butylphenol, and the like. Unreacted monomers after emulsion polymerization can be removed by conventional methods such as vacuum distillation.

In addition, a freeze stabilizer, an emulsion stabilizer, a viscosity modifier, an antioxidant, a preservative or the like can be optionally added after polymerization to the chloroprene-based polymer latex obtained by the production method of an embodiment of the present invention, as long as the effect of the present invention is not impaired.

The method for producing the chloroprene-based polymer latex according to one embodiment of the present invention may further include a mixing step of mixing two or more types of chloroprene-based polymer latex with different weight average molecular weights after the polymerization step. In the mixing step, two or more types of chloroprene-based polymer latex can be mixed by a known method. In the mixing step, the chloroprene-based polymer latex may be obtained by, for example, stirring and mixing using a paddle blade at 30 to 300 rpm for 20 seconds to 3 minutes, and for example, at 100 rpm for 2 minutes.

4. Chloroprene-based Polymer Latex Composition

The chloroprene-based polymer latex composition of an embodiment of the present invention contains the chloroprene-based polymer latex containing the chloroprene-based polymer of the present invention. The chloroprene-based polymer latex composition of an embodiment of the present invention may contain, in addition to the chloroprene-based polymer latex, a metal oxide, an antioxidant, and other agents as required. The types and amounts of the metal oxides, the antioxidants, and other required agents that may be contained in the chloroprene-based polymer latex composition are described below as components that the dip-molded product may contain.

5. Method for Producing Chloroprene-based Polymer Latex

The method for producing the chloroprene-based polymer latex may include a raw material mixing step in which raw materials including the chloroprene-based polymer latex, the metal oxide, the antioxidant, and other necessary agents are mixed.

In the mixing step, an aqueous dispersion solution containing the metal oxide, the antioxidant, and other necessary agents can be prepared in advance, and the chloroprene-based polymer latex and the aqueous dispersion solution can be mixed.

The mixing step can be performed with a known mixing device such as a ball mill.

6. Dip-molded Product (Dip-molded Coating/Film)

The dip-molded product of an embodiment of the present invention is obtained using the above-mentioned chloroprene-based polymer latex composition. The dip-molded article of the embodiment can be made by dip-molding the aforementioned chloroprene-based polymer latex composition alone or after mixing it with other chloroprene-based polymer latex compositions. The dip-molded product of the present invention can be obtained by dip-molding a chloroprene-based polymer latex composition containing the chloroprene-based polymer latex containing the chloroprene-based polymer by an immersion coagulation method, and then subjecting the dip-molded article to a heat-drying treatment at 150°C for 60 minutes. The dip-molded product of the present invention has high tensile strength at cut, a low modulus at 100% elongation, and an excellent texture. The dip-molded product can be suitably used as industrial/general household gloves, medical gloves, balloons, catheters, and boots.

The dip-molded product of the present invention may have components contained in the chloroprene-based polymer latex described above. The dip-molded product can contain chloroprene-based polymer as a base polymer. When the dip-molded product is 100% by mass, the chloroprene-based polymer can be contained 70% or more by mass, preferably 80% or more by mass, and more preferably 90% or more by mass. When the dip-molded product is 100% by mass, the content ratio of the chloroprene-based polymer in the dip-molded product can be, for example, 70, 75, 80, 85, 90, 95, 96, 97, 98, 99, or 100% by mass, and may be in the range between the two values exemplified herein.

The dip-molded product containing the chloroprene-based polymer of the present invention has high tensile strength at cut, a low modulus at 100% elongation and an excellent texture, with or without the addition of a vulcanizing agent and a vulcanization accelerator. The chloroprene-based polymer latex composition of one embodiment of the present invention may not contain the vulcanizing agent or the vulcanization accelerator, and also may not contain sulfur or the vulcanization accelerator such as thiuram-based, dithiocarbamate-based, thiourea-based, guanidine-based, xanthogenate-based, and thiazole-based vulcanization accelerator. The following is a detailed description of the components that the dip-molded product of the present invention may contain.

6.1 Metal Oxide

The dip-molded product of the chloroprene-based polymer of the present invention can contain a metal oxide.

The metal oxide contained in the chloroprene-based polymer latex composition used to obtain the dip-molded product is not particularly limited, and examples thereof include zinc oxide, lead oxide, trilead tetroxide, magnesium oxide, aluminum oxide, iron oxide, beryllium oxide, and titanium oxide. Preferably, the metal oxide includes zinc oxide. Zinc oxide is generally said to function as a scavenger for the dechlorination atoms of chloroprene-based polymers. **In** addition, these metal oxides may be used alone or in combination of two or more.

The amount of the metal oxide added is preferably 0.5 to 15.0 parts by mass, with respect to 100 parts by mass of solid content of the chloroprene-based polymer latex contained in the chloroprene-based polymer latex composition used to obtain the dip-molded product. When the amount of the metal oxide added is 0.5 parts by mass or more, the tensile strength at cut is expected to improve due to the crosslinking effect between the polymers. When the amount of the metal oxide added is 15.0 parts by mass or less, a dip-molded product with excellent flexibility can be obtained. Further, from the viewpoint of physical property balance between flexibility and tensile strength at cut of the obtained dip-molded product, the amount of the metal oxide added is more preferably 0.5 to 5.0 parts by mass.

6.2 Antioxidant

The dip-molded product of the chloroprene-based polymer of the present invention can also contain an antioxidant.

The antioxidant is not particularly limited, and phenolic antioxidants, amine antioxidants, heat-resistant oxidation (aging) antioxidants, ozone-resistant antioxidants, and the like can be used. When the obtained dip-molded product is used as a medical glove, a phenolic antioxidant can be used from the viewpoint of the color tone, texture, and hygiene of the dip-molded product. In particular, hindered phenol antioxidants have the above-mentioned effects. Examples of the hindered phenolic antioxidant include 2,2'-methylenebis(4-ethyl-6-t-butylphenol), 2,2'-methylenebis(4-methyl-6-t-butylphenol), 4,4'-butylidene(3-methyl-6-t-butylphenol), 4,4'-thiobis(3-methyl-6-t-butylphenol), butylated reaction product of p-cresol and dicyclopentadiene, 2,5'-di-t-butylhydroquinone, and 2,5'-di-t-amylhydroquinone. Among these, a butylated reaction product of p-cresol and dicyclopentadiene is preferred from the viewpoint of being generally dispersible in aqueous materials. Further, these compounds may be used alone or in combination of two or more.

The amount of the antioxidant added is preferably 0.5 to 10.0 parts by mass, with respect to 100 parts by mass of solid content of the chloroprene-based polymer latex contained in the chloroprene-based polymer latex composition used to obtain the dip-molded product. The amount of the antioxidant added is, for example, 0.5, 1.0, 2.0, 3.0, 4.0, 5.0, 6.0, 7.0, 8.0, 9.0, or 10.0 parts by mass, and may be in the range between the two values exemplified herein. When the amount of the antioxidant added is 0.5 parts by mass or more, the effect of suppressing color tone change of the dip-molded product can be obtained. When the amount of the antioxidant added is 10.0 parts by mass or less, the stability of the chloroprene-based polymer latex composition is ensured. Further, from the viewpoint of physical property balance between flexibility and tensile strength at cut of the obtained dip-molded product, the amount of the antioxidant added is more preferably 0.5 to 5.0 parts by mass.

6.3 Vulcanizing Agent and Vulcanization Accelerator

The dip-molded product of the chloroprene-based polymer of one embodiment of the present invention can also contain a vulcanizing agent and/or a vulcanization accelerator. **In** addition, the chloroprene-based polymer latex composition used to obtain the dip-molded product may not contain sulfur and the vulcanization accelerator such as thiuram-based, dithiocarbamate-based, thiourea-based, guanidine-based, xanthate-based, thiazole-based vulcanization accelerator. In other words, the product of the chloroprene-based polymer latex composition includes those that contain a vulcanizing agent but do not contain a vulcanization accelerator, those that do not contain a vulcanizing agent but contain a vulcanization accelerator, those that contain a vulcanizing agent and a vulcanization accelerator, and those that do not contain a vulcanizing agent and a vulcanization accelerator. Whether or not to incorporate a vulcanizing agent and a vulcanization accelerator may be determined depending on the intended dip-molded product.

Examples of the vulcanizing agent include, but are not limited to, sulfur and the like. The amount of the vulcanizing agent added can be 0 to 10.0 parts by mass, with respect to 100 parts by mass of solid content of the chloroprene-based polymer latex contained in the chloroprene-based polymer latex composition. The amount of the vulcanizing agent added is, for example, 0, 1.0, 2.0, 3.0, 4.0, 5.0, 6.0, 7.0, 8.0, 9.0, or 10.0 parts by mass, and may be in the range between the two values exemplified herein.

A vulcanization accelerator is an agent that is added during the vulcanization of raw rubber for the purpose of interacting with the vulcanizing agent to increase the vulcanization rate, shorten the vulcanization time, lower the vulcanization temperature, reduce the amount of vulcanizing agent, and improve the physical properties of the vulcanized rubber, and usually refers to an agent that accelerates the sulfur vulcanization reaction.

Examples of the vulcanization accelerator commonly used for vulcanization of the chloroprene-based polymer latex include, but are not limited to, thiuram-based, dithiocarbamate-based, thiourea-based, guanidine-based, xanthate-based, thiazole-based vulcanization accelerators, and the like. These may be used alone or in combination of two or more as required.

Examples of the thiuram-based vulcanization accelerator include tetramethylthiuram disulfide, tetraethylthiuram disulfide, tetrabutylthiuram disulfide, tetrakis(2-ethylhexyl) thiuram disulfide, tetramethylthiuram monosulfide, dipentamethylenethiuram tetrasulfide, and the like.

Examples of the dithiocarbamate-based vulcanization accelerator include sodium dibutyldithiocarbamate, zinc dimethyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, tellurium diethyldithiocarbamate, and the like, and zinc dibutyldithiocarbamate is particularly preferably used.

Examples of the thiourea-based vulcanization accelerator include ethylenethiourea, N,N'-diethylthiourea, trimethylthiourea, N,N'-diphenylthiourea, and the like.

Examples of the guanidine-based vulcanization accelerator include 1,3-diphenylguanidine, 1,3-di-o-tolylguanidine, 1-o-tolylbiguanide, di-o-tolylguanidine salt of dicatechol borate, and the like.

Examples of the xanthate-based vulcanization accelerator include zinc butylxanthate, zinc isopropylxanthate, and the like.

Examples of the thiazole-based vulcanization accelerator include 2-mercaptobenzothiazole, di-2-benzothiazolyl disulfide, 2-mercaptobenzothiazole zinc salt, cyclohexylamine salt of 2-mercaptobenzothiazole, 2-(4'-morpholinodithio) benzothiazole, and the like.

The amount of the vulcanization accelerator added can be 0 to 5.0 parts by mass, with respect to 100 parts by mass of solid content of the chloroprene-based polymer latex contained in the chloroprene-based polymer latex composition. The amount of the vulcanization accelerator added is, for example, 0, 0.5, 1.0, 1.5, 2.0, 2.5, 3.0, 3.5, 4.0, 4.5, or 5.0, and may be in the range between the two values exemplified herein.

6.4 Other Agents (Heteroaromatic ring-based compound)

The dip-molded product of the chloroprene-based polymer of the present invention may contain a heteroaromatic ring-based compound in the chloroprene-based polymer.

The heteroaromatic ring-based compound contained in the chloroprene-based polymer latex composition used to obtain the dip-molded product can be represented by the chemical formula (1), and has a benzimidazole structure. Note that the compound having this structure is sometimes employed mainly as a secondary anti-aging agent in the formulation of rubber composition.

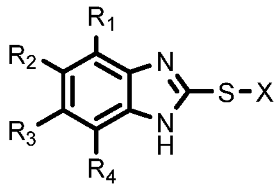

(1)

In chemical formula (1), X of the mercapto group represents a hydrogen atom or a metal atom. It is also possible for X to be a hydrogen atom and have a thiol group. In addition, X can also be a metal atom, and examples of the metal atom include zinc, sodium, copper, nickel, and tellurium, and among these, zinc is preferred.
In chemical formula (1), $R_1$ to $R_4$ each represents a hydrogen atom, an alkyl group which may have a substituent, an ether group which may have a substituent, a nitro group, an amino group, or a carboxyl group. $R_1$ to $R_4$ each may be the same or different. Further, the heteroaromatic ring-based compound may be used alone or in combination of two or more.

Examples of the heteroaromatic ring-based compound include 2-mercaptobenzimidazole, 5-methyl-2-mercaptobenzimidazole, 4-methyl-2-mercaptobenzimidazole, 5-methoxy-2-mercaptobenzimidazole, 4-methoxy-2-mercaptobenzimidazole, 5-nitro-2-mercaptobenzimidazole, 5-amino-2-mercaptobenzimidazole, 5-carboxy-2-mercaptobenzimidazole, or a zinc salt of 2-mercaptobenzimidazole. Among these, 2-mercaptobenzimidazole, 5-methyl-2-mercaptobenzimidazole, 4-methyl-2-mercaptobenzimidazole, 5-methoxy-2-mercaptobenzimidazole, 4-methoxy-2-mercaptobenzimidazole, zinc salt of 2-mercaptobenzimidazole are preferred.

The amount of the heteroaromatic ring-based compound added is preferably 0.2 to 10.0 parts by mass, with respect to 100 parts by mass of solid content of the chloroprene-based polymer latex contained in the chloroprene-based polymer latex composition. The amount of the heteroaromatic ring-based compound added is, for example, 0.2, 0.3, 0.4, 0.5, 1.0, 2.0, 3.0, 4.0, 5.0, 6.0, 7.0, 8.0, 9.0, or 10.0 parts by mass, and may be in the range between the two values exemplified herein. When the amount added is 0.2 parts by mass or more, the dip-molded product obtained using the present composition exhibits extremely high tensile strength at cut. When the amount added is 10.0 parts by mass or less, the stability of the chloroprene-based polymer latex composition is ensured. In addition, from the viewpoint of physical property balance between flexibility and tensile strength at cut of the obtained dip-molded product, the amount added is more preferably 0.3 to 5.0 parts by mass.

6.5 Characteristics of Dip-molded Product

The tensile strength at cut of the dip-molded product of the present invention measured in accordance with JIS K6251 is preferably 17.0 MPa or more, and more preferably 20.0 MPa or more. The tensile strength at cut is, for example, 17.0, 18.0, 19.0, 20.0, 21.0, 22.0, 23.0, 24.0, 25.0, 26.0, 27.0, 28.0, 29.0, 30.0, 31.0, 32.0, 33.0, 34.0, 35.0, 36.0, 37.0, 38.0, 39.0, or 40.0 MPa, and may be in the range between the two values exemplified herein. In particular, in the ASTM standard "D3577" for surgical glove applications, the tensile strength at cut (breaking strength) is specified as 17 MPa or more, and if the tensile strength at cut is 20 MPa, the dip-molded product is considered to show more sufficient mechanical properties.

The dip-molded product of an embodiment of the present invention has a modulus at 100% elongation, measured in accordance with JIS K6251, preferably of 0.70 MPa or less, and more preferably of 0.5 MPa or less. The modulus at 100% elongation is, for example, 0.30, 0.35, 0.40, 0.45, 0.50, 0.55, 0.60, 0.65, or 0.70 MPa, and may be in the range between the two values exemplified herein.

The dip-molded product may contain a chloroprene-based polymer, and may further contain an antioxidant and a metal oxide. In addition, the above-mentioned dip-molded product may contain a vulcanizing agent, a vulcanization accelerator, and other reagents. The method for producing the dip-molded product, and the methods of measuring the tensile strength at cut and the modulus at 100% elongation can be as described in the Examples.

Furthermore, as mentioned above, the tensile strength at cut and the modulus at 100% elongation of the dip-molded product containing the chloroprene-based polymer latex composition can be controlled by adjusting the type and amount of raw material blend, the type and amount of chemicals used, and the polymerization conditions when polymerizing the chloroprene-based polymer, and by adjusting the type and amount of monomer units contained in the obtained chloroprene-based polymer, as well as the weight average molecular weight and the mixing ratio of the chloroprene-based polymer.

6.5 Shape of Dip-molded Product

The thickness (for example, minimum thickness) of the dip-molded product may be 0.01 to 0.50 mm. The thickness of the dip-molded product is, for example, 0.01, 0.05, 0.10, 0.20, 0.30, 0.40, or 0.50 mm, and may be in the range between the two values exemplified herein. The thickness of the dip-molded product can be adjusted by the time for which the mold is immersed in the polymer latex composition, the solid content concentration of the chloroprene-based polymer

latex composition, and the like. If it is desired to reduce the thickness of the dip-molded product, the immersion time may be shortened or the solid content concentration of the chloroprene-based polymer latex composition may be reduced.

The dip-molded product obtained from chloroprene-based polymer latex compositions may contain sulfur or vulcanization accelerators. However, even without sulfur and vulcanization accelerators, the above dip-molded product has mechanical properties comparable to or better than those of a vulcanized dip-molded product obtained from conventional chloroprene-based polymer latex. Therefore, the chloroprene-based polymer latex composition is suitably used as a raw material for the dip-molded product (dip-molded article) of the chloroprene-based polymer of this embodiment.

7. Method for Producing Dip-molded Product

The method for producing the dip-molded product containing the chloroprene-based polymer of the present invention may include the following steps:

A molding step in which the chloroprene-based polymer latex composition containing the chloroprene-based polymer described above is formed into the dip-molded article using a calcium-based coagulant by an immersion coagulation method, and

A drying step in which the obtained dip-molded article is subjected to a heat-drying treatment to obtain the dip-molded product.

The molding method for producing the dip-molded article according to an embodiment of the present invention is not particularly limited, and may be molded according to a conventional method. Examples of the molding method include an immersion coagulation method, a simple immersion method, a heat-sensitive immersion method, an electrodeposition method, etc. The immersion coagulation method can be used from the viewpoint of easy production and easily obtaining a dip-molded article with a constant thickness. Specifically, a mold die made of ceramics coated with a calcium-based coagulating liquid is immersed in the chloroprene-based polymer latex composition, and the chloroprene-based polymer latex composition is coagulated. Then, after watersoluble impurities are removed by leaching, it is dried, and further heated and vulcanized to form a dip-molded film (rubber coating), and then the dip-molded film is released from the mold. Thereby, a film-like dip-molded article can be obtained.

The method for producing the dip-molded product of an embodiment of the present invention may include a step of subjecting the obtained dip-molded article to a heat-drying treatment to vulcanize the unvulcanized dip-molded article. The heat-drying temperature may be appropriately set according to the composition of the chloroprene-based polymer latex composition, and may be 100 to 220°C or 120 to 180°C. The vulcanization temperature may be, for example, 100, 110, 120, 130, 140, 150, 160, 170, 180, 190, 200, 210, or 220°C, and may be in the range between the two values exemplified herein. The heat drying time may be appropriately set according to the composition of the chloroprene-based polymer latex composition, or the shape of the unvulcanized molded article, or the like, and may be 10 to 300 minutes. The heat drying time may be, for example, 10, 20, 30, 40, 50, 60, 70, 80, 90, 100, 110, 120, 130, 140, 150, 160, 170, 180, 190, 200, 210, 220, 230, 240, 250, 260, 270, 280, 290, or 300 minutes, and may be in the range between the two values exemplified herein. As an example, the dip-molded product of an embodiment of the present invention may be subjected to a heat drying treatment at 150°C for 1 hour.

## Examples

The present invention will be described in more detail below based on Examples, but the present invention is not to be construed as limited thereto.

(Example 1)

<Preparation of chloroprene-based polymer>

(Example 1)

(Synthesis Example 1)

In a polymerization vessel with an internal volume of 30 L, 86 parts by mass of chloroprene (monomer), 9 parts by mass of 2,3-dichloro-1,3-butadiene, 77 parts by mass of pure water, 17.6 parts by mass of gum rosin-based disproportionated potassium rosinate (aqueous solution) (product name "RONJIS K-25", manufactured by Arakawa Chemical Industry Co.), 0.02 parts by mass of n-dodecylmercaptan, 0.8 parts by mass of potassium hydroxide, 0.5 parts by mass of

sodium salt of β-naphthalenesulfonic acid formalin condensate (product name "Demol N", manufactured by Kao Corporation), 0.5 parts by mass of sodium bisulfite, and 0.04 parts by mass of thiourea dioxide were added. Polymerization was carried out under a nitrogen flow at a polymerization temperature of 13°C by continuously adding 0.35 % by mass of potassium persulfate solution as a polymerization initiator. When the polymerization ratio reached 50%, 5 parts by mass of chloroprene (monomer) was added. When the polymerization ratio reached 83%, 0.1 parts by mass of diethylhydroxylamine as a polymerization terminator was added to stop the polymerization, thereby obtaining a polymerization solution. The polymerization solution was distilled under reduced pressure to remove unreacted monomers, and then concentrated to obtain Latex a with a solid content of 55 % by mass. The weight average molecular weight of Latex a was measured by the method described below and was 735,432.

(Synthesis Example 2)

In a polymerization vessel with an internal volume of 30 L, 91 parts by mass of chloroprene (monomer), 9 parts by mass of 2,3-dichloro-1,3-butadiene, 77 parts by mass of pure water, 17.6 parts by mass of gum rosin-based disproportionated potassium rosinate (aqueous solution) (product name "RONJIS K-25", manufactured by Arakawa Chemical Industry Co.), 3.6 parts by mass of n-dodecylmercaptan, 0.8 parts by mass of potassium hydroxide, 0.5 parts by mass of sodium salt of β-naphthalenesulfonic acid formalin condensate (product name "Demol N", manufactured by Kao Corporation), and 0.5 parts by mass of sodium bisulfite were added. Polymerization was carried out under a nitrogen flow at a polymerization temperature of 35°C by continuously adding 0.35 % by mass of potassium persulfate solution as a polymerization initiator. When the polymerization ratio reached 80%, 0.1 parts by mass of diethylhydroxylamine was added as a polymerization terminator to stop the polymerization to obtain the polymerization solution. The polymerization solution was distilled under reduced pressure to remove unreacted monomers, and then concentrated to obtain Latex b with a solid content of 55 % by mass.

(Preparation of chloroprene-based polymer I)

Next, these Latexes a and b were mixed in a mass ratio of a/b=80/20 to obtain a latex containing the chloroprene-based polymer I. For the measurement of physical properties, 200 ml of the obtained latex was sampled, and the remaining latex was used to prepare a dipped film for evaluation.

(Preparation of samples for dynamic viscoelasticity measurement)

The sampled latex was poured into a steel metal frame (150 mm x 210 mm) to a height of about 1.5 mm and left to stand at 23°C for 3 days to evaporate volatiles to obtain a dried sheet. Dynamic viscoelasticity measurements were performed using the dried sheet obtained. The result is shown in Table 1. The measurement conditions are described below.

(Preparation of samples for measuring weight average molecular weight and 2,3-dichloro-1,3-butadiene content in chloroprene-based polymer)

The sampled latex was mixed with a large amount of methanol to precipitate the rubber portion (polymer), which was then filtered and dried to obtain a sample of chloroprene-based polymer I. From the obtained sample, the weight average molecular weight of the chloroprene-based copolymer was measured. In addition, the content of 2,3-dichloro-1,3-butadiene (% by mass) in the chloroprene-based polymer was determined by analysis. The analysis result is shown in Table 1. The methods for measurement are described below.

(Example 2)

(Synthesis Example 3)

Polymerization was carried out in the same manner as in Synthesis Example 2, except that n-dodecyl mercaptan was used in an amount of 5.3 parts by mass. The obtained polymerization solution was distilled under reduced pressure to remove unreacted monomers, and then concentrated to obtain Latex c having a solid content of 55% by mass.

(Preparation of chloroprene-based polymer II)

Latex a and Latex c obtained in the same manner as in Synthesis Example 1 were mixed in a mass ratio of a/c=80/20 to obtain the chloroprene-based polymer latex II. For the measurement of physical properties, 200 ml of the

obtained latex was sampled, and the remaining latex was used to prepare a dipped film for evaluation.

Using the sampled latex, a dried sheet was obtained in the same manner as in Example 1, and the dynamic viscoelasticity was measured in the same manner as in Example 1. The result is shown in Table 1.

Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.

(Example 3)

(Synthesis Example 4)

Polymerization was carried out in the same manner as in Synthesis Example 2, except that n-dodecyl mercaptan was used in an amount of 2.4 parts by mass. The obtained polymerization solution was distilled under reduced pressure to remove unreacted monomers, and then concentrated to obtain Latex d having a solid content of 55% by mass.

(Preparation of chloroprene-based polymer III)

Latex a and Latex d obtained in the same manner as in Synthesis Example 1 were mixed in a mass ratio of a/d=80/20 to obtain the chloroprene-based polymer latex III. For the measurement of physical properties, 200 ml of the obtained latex was sampled, and the remaining latex was used to prepare a dipped film for evaluation.

Using the sampled latex, a dried sheet was obtained in the same manner as in Example 1, and the dynamic viscoelasticity was measured in the same manner as in Example 1. The result is shown in Table 1.

Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.

(Example 4)

(Synthesis Example 5)

Polymerization was carried out in the same manner as in Synthesis Example 2, except that n-dodecyl mercaptan was used in an amount of 1.5 parts by mass. The obtained polymerization solution was distilled under reduced pressure to remove unreacted monomers, and then concentrated to obtain Latex e having a solid content of 55% by mass.

(Preparation of chloroprene-based polymer IV)

Latex a and Latex e obtained in the same manner as in Synthesis Example 1 were mixed in a mass ratio of ale=80/20 to obtain the chloroprene-based polymer latex IV. For the measurement of physical properties, 200 ml of the obtained latex was sampled, and the remaining latex was used to prepare a dipped film for evaluation.

Using the sampled latex, a dried sheet was obtained in the same manner as in Example 1, and the dynamic viscoelasticity was measured in the same manner as in Example 1. The result is shown in Table 1.

Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.

(Example 5)

(Synthesis Example 6)

Polymerization was carried out in the same manner as in Synthesis Example 1, except that 95 parts by mass of chloroprene (monomer) and 0 parts by mass of 2,3-dichloro-1,3-butadiene were used. When the polymerization ratio reached 50%, 5 parts by mass of chloroprene (monomer) was added. When the polymerization ratio reached 83%, 0.1 parts by mass of diethylhydroxylamine as a polymerization terminator was added to stop the polymerization, thereby obtaining a polymerization solution. The obtained polymerization solution was distilled under reduced pressure to remove unreacted monomers, and was concentrated to obtain Latex f having a solid content of 55% by mass. The weight average molecular weight of Latex f was measured by the method described below, and was 689,512.

(Synthesis Example 7)

Polymerization was carried out in the same manner as in Synthesis Example 2, except that 100 parts by mass of chloroprene (monomer) and 0 parts by mass of 2,3-dichloro-1,3-butadiene were used. The obtained polymerization solution was distilled under reduced pressure to remove unreacted monomers, and then concentrated to obtain Latex g having a solid content of 55% by mass.

(Preparation f chloroprene-based polymer V)

Next, these Latexes f and g were mixed in a mass ratio of f/g=80/20 to obtain the chloroprene-based polymer latex V. For the measurement of physical properties, 200 ml of the obtained latex was sampled, and the remaining latex was used to prepare a dipped film for evaluation.
Using the sampled latex, a dried sheet was obtained in the same manner as in Example 1, and the dynamic viscoelasticity was measured in the same manner as in Example 1. The result is shown in Table 1.
Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.

(Example 6)

Polymerization was carried out in the same manner as in Synthesis Example 1, and the obtained polymerization solution was distilled under reduced pressure to remove unreacted monomers, and then concentrated to obtain Latex a having a solid content of 55% by mass.
Polymerization was carried out in the same manner as in Synthesis Example 2, and the obtained polymerization solution was distilled under reduced pressure to remove unreacted monomers, and then concentrated to obtain Latex b having a solid content of 55% by mass.

(Preparation of chloroprene-based polymer VI)

Next, these Latexes a and b were mixed in a mass ratio of a/b=60/40 to obtain the chloroprene-based polymer latex VI. For the measurement of physical properties, 200 ml of the obtained latex was sampled, and the remaining latex was used to prepare a dipped film for evaluation.
Using the sampled latex, a dried sheet was obtained in the same manner as in Example 1, and the dynamic viscoelasticity was measured in the same manner as in Example 1. The result is shown in Table 1.
Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.

(Example 7)

Polymerization was carried out in the same manner as in Synthesis Example 1, and the obtained polymerization solution was distilled under reduced pressure to remove unreacted monomers, and then concentrated to obtain Latex a having a solid content of 55% by mass.
Polymerization was carried out in the same manner as in Synthesis Example 2, and the obtained polymerization solution was distilled under reduced pressure to remove unreacted monomers, and then concentrated to obtain Latex b having a solid content of 55% by mass.

(Preparation of chloroprene-based polymer VII)

Next, these Latexes a and b were mixed in a mass ratio of a/b=90/10 to obtain the chloroprene-based polymer latex VII. For the measurement of physical properties, 200 ml of the obtained latex was sampled, and the remaining latex was used to prepare a dipped film for evaluation.
Using the sampled latex, a dried sheet was obtained in the same manner as in Example 1, and the dynamic viscoelasticity was measured in the same manner as in Example 1. The result is shown in Table 1.
Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.

(Example 8)

(Synthesis Example 8)

In a polymerization vessel with an internal volume of 30 L, 86 parts by mass of chloroprene (monomer), 9 parts by mass of 2,3-dichloro-1,3-butadiene, 90 parts by mass of pure water, 4.4 parts by mass of potassium salt of conjugated resin acid-based rosin acid (product name "Hartall R-WW", manufactured by Harima Chemicals Co.), 0.02 parts by mass of n-dodecylmercaptan, 0.8 parts by mass of potassium hydroxide, 0.5 parts by mass of sodium salt of β-naphthalenesulfonic acid formalin condensate (product name "Demol N", manufactured by Kao Corporation), 0.5 parts by mass of sodium bisulfite, and 0.04 parts by mass of thiourea dioxide were added. Polymerization was carried out under a nitrogen flow at a polymerization temperature of 13°C by continuously adding 0.35 % by mass of potassium persulfate solution as a polymerization initiator. When the polymerization ratio reached 50%, 5 parts by mass of chloroprene (monomer) was added. When the polymerization ratio reached 83%, 0.1 parts by mass of diethylhydroxylamine as a polymerization terminator was added to stop the polymerization, thereby obtaining a polymerization solution. The polymerization solution was distilled under reduced pressure to remove unreacted monomers, and then concentrated to obtain Latex h having a solid content of 55 % by mass.

(Synthesis Example 9)

In a polymerization vessel with an internal volume of 30 L, 91 parts by mass of chloroprene (monomer), 9 parts by mass of 2,3-dichloro-1,3-butadiene, 90 parts by mass of pure water, 4.4 parts by mass of potassium salt of conjugated resin acid-based rosin acid (product name "Hartall R-WW", manufactured by Harima Chemicals Co.), 3.6 parts by mass of n-dodecylmercaptan, 0.8 parts by mass of potassium hydroxide, 0.5 parts by mass of sodium salt of β-naphthalenesulfonic acid formalin condensate (product name "Demol N", manufactured by Kao Corporation), and 0.5 parts by mass of sodium bisulfite were added. Polymerization was carried out under a nitrogen flow at a polymerization temperature of 35°C by continuously adding 0.35 % by mass of potassium persulfate solution as a polymerization initiator. When the polymerization ratio reached 80%, 0.1 parts by mass of diethylhydroxylamine as a polymerization terminator was added to stop the polymerization, thereby obtaining a polymerization solution. The polymerization solution was distilled under reduced pressure to remove unreacted monomers, and then concentrated to obtain Latex i having a solid content of 55 % by mass.

(Preparation of chloroprene-based polymer VIII)

Next, these Latexes h and i were mixed in a mass ratio of h/i=80/20 to obtain the chloroprene-based polymer latex VIII. For the measurement of physical properties, 200 ml of the obtained latex was sampled, and the remaining latex was used to prepare a dipped film for evaluation.

Using the sampled latex, a dried sheet was obtained in the same manner as in Example 1, and the dynamic viscoelasticity was measured in the same manner as in Example 1. The result is shown in Table 1.

Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.

(Comparative Example 1)

Polymerization was carried out in the same manner as in Synthesis Example 1, and the obtained polymerization solution was distilled under reduced pressure to remove unreacted monomers, and then concentrated to obtain Latex a having a solid content of 55% by mass.

200 ml of Latex a was sampled, and the remaining latex was used to prepare a dipped film for evaluation.

Using the sampled latex, a dried sheet was obtained in the same manner as in Example 1, and the dynamic viscoelasticity was measured in the same manner as in Example 1. The result is shown in Table 1.

Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.

(Comparative Example 2)

Polymerization was carried out in the same manner as in Synthesis Example 1, and the obtained polymerization solution was distilled under reduced pressure to remove unreacted monomers, and then concentrated to obtain Latex a having a solid content of 55% by mass.

Polymerization was carried out in the same manner as in Synthesis Example 2, and the obtained polymerization solution was distilled under reduced pressure to remove unreacted monomers, and then concentrated to obtain Latex b having a solid content of 55% by mass.

(Preparation of chloroprene-based polymer IX)

Next, these Latexes a and b were mixed in a mass ratio of a/b=50/50 to obtain the chloroprene-based polymer latex IX. For the measurement of physical properties, 200 ml of the obtained latex was sampled, and the remaining latex was used to prepare a dipped film for evaluation.

Using the sampled latex, a dried sheet was obtained in the same manner as in Example 1, and the dynamic viscoelasticity was measured in the same manner as in Example 1. The result is shown in Table 1.

Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.

(Comparative Example 3)

(Synthesis Example 10)

In a polymerization vessel with an internal volume of 30 L, 100 parts by mass of chloroprene (monomer), 80 parts by mass of pure water, 4 parts by mass of gum rosin-based disproportionated potassium rosinate (aqueous solution) (product name "RONJIS K-25", manufactured by Arakawa Chemical Industry Co.), 0.05 parts by mass of n-dodecylmercaptan, 0.4 parts by mass of potassium hydroxide, 0.7 parts by mass of sodium salt of β-naphthalenesulfonic acid formalin condensate (product name "Demol N", manufactured by Kao Corporation) were added. Polymerization was carried out under a nitrogen flow at a polymerization temperature of 40°C by continuously adding 0.35 % by mass of potassium persulfate solution as a polymerization initiator. When the polymerization ratio reached 90%, 0.05 % by mass of 2,6-di-tert-butyl-4-methylphenol was added as a polymerization terminator to stop the polymerization to obtain the polymerization solution. The polymerization solution was distilled under reduced pressure to remove unreacted monomers, and then concentrated to obtain Latex j with a solid content of 55 % by mass.

(Synthesis Example 11)

Polymerization was carried out in the same manner as in Synthesis Example 10, except that n-dodecyl mercaptan was used in an amount of 0.25 parts by mass. The obtained polymerization solution was distilled under reduced pressure to remove unreacted monomers, and then concentrated to obtain Latex k having a solid content of 55% by mass.

(Preparation of chloroprene-based polymer X)

Next, these latexes j and k were mixed in a mass ratio of j/k=50/50 to obtain the chloroprene-based polymer latex X. For the measurement of physical properties, 200 ml of the obtained latex was sampled, and the remaining latex was used to prepare a dipped film for evaluation.

Using the sampled latex, a dried sheet was obtained in the same manner as in Example 1, and the dynamic viscoelasticity was measured in the same manner as in Example 1. The result is shown in Table 1.

Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.

(Comparative Example 4)

(Synthesis Example 12)

Polymerization was carried out in the same manner as in Synthesis Example 10, except that 90 parts by mass of chloroprene (monomer), 10 parts by mass of 2,3-dichloro-1,3-butadiene, and 0.07 parts by mass of n-dodecylmercaptan were used. The obtained polymerization solution was distilled under reduced pressure to remove unreacted monomers, and then concentrated to obtain Latex l having a solid content of 55% by mass.

(Synthesis Example 13)

Polymerization was carried out in the same manner as in Synthesis Example 10, except that 90 parts by mass of chloroprene (monomer), 10 parts by mass of 2,3-dichloro-1,3-butadiene, and 0.31 parts by mass of n-dodecylmercaptan were used. The obtained polymerization solution was distilled under reduced pressure to remove unreacted monomers, and then concentrated to obtain Latex m having a solid content of 55% by mass.

(Preparation of chloroprene-based polymer XI)

Next, these latexes l and m were mixed in a mass ratio of l/m=30/70 to obtain the chloroprene-based polymer latex XI. For the measurement of physical properties, 200 ml of the obtained latex was sampled, and the remaining latex was used to prepare a dipped film for evaluation.
Using the sampled latex, a dried sheet was obtained in the same manner as in Example 1, and the dynamic viscoelasticity was measured in the same manner as in Example 1. The result is shown in Table 1.
Using the sampled latex, the weight average molecular weight of the chloroprene-based copolymer and the content of 2,3-dichloro-1,3-butadiene (% by mass) were determined by analysis in the same manner as in Example 1. The analysis results are shown in Table 1.
The chloroprene-based polymers were analyzed by the following methods.

<Measurement of dynamic viscoelasticity of chloroprene-based polymer>

The dried sheets of each Example and Comparative Example were used as the film containing the chloroprene-based polymer. The film containing the chloroprene-based polymer of each Example and Comparative Example was cut out to prepare a rectangular test piece (width: 4.5 mm, length: 30 mm, thickness: 0.80 to 0.90 mm). The obtained rectangular test piece was used to perform a tensile dynamic viscoelasticity measurement (chuck distance: 20 mm) in accordance with the non-resonant forced vibration method. The measurement conditions were a static tension of 5 gf, a temperature of 25°C, and a strain of 0.75%, and the loss tangent tan δ in the frequency range of 10 Hz was measured. The measurement device used was DDV-25FP manufactured by Orientec Co., Ltd. The results are shown in Table 1.

<Weight average molecular weight measurement of chloroprene-based polymer>

The weight average molecular weight was measured by gel permeation chromatography (GPC) under the measurement conditions described below, using a sample obtained by dissolving the polymer precipitated from the latex containing the chloroprene-based polymer in 20 ml of tetrahydrofuran.

Device name: HLC-8320 (manufactured by Tosoh Corporation)
Column: 3 of TSKgel GMHHR-H columns in series
Temperature: 40°C
Detection: Differential refractive index
Solvent: Tetrahydrofuran
Calibration curve: Prepared using standard polystyrene (PS).

<Measurement of 2,3-dichloro-1,3-butadiene content in chloroprene-based polymer>

The polymer precipitated from the latex containing the chloroprene-based polymer was cut into a test piece of 0.05 mg, and measured by pyrolysis gas chromatography to determine the area ratio of the peak derived from chloroprene with respect to the peak derived from 2,3-dichloro-1,3-butadiene. Using a calibration curve of the area ratio of the peak derived from chloroprene with respect to the peak derived from 2,3-dichloro-1,3-butadiene and the 2,3-dichloro-1,3-butadiene content, the content (% by mass) of 2,3-dichloro-1,3-butadiene in the chloroprene-based polymer was determined.

[Measurement conditions for gas chromatography]

Measurement conditions for pyrolysis gas chromatography
Instrument name: HP5890-II
Column: DB-5 0.25mmφ x 30m (film thickness 1.0μm)

Column temperature: 50°C (5min) -> 10°C/min -> 150°C -> 25°C/min -> 300°C
Injection port temperature: 250°C
Detector temperature: 280°C
Detector: FID

The dip-molded product containing the chloroprene-based polymers were evaluated by the following methods.

<Preparation of dip-molded product for tensile property evaluation>

A chloroprene-based polymer latex composition was prepared by mixing 100 parts by mass of solids of the latex containing each chloroprene-based polymer with an aqueous dispersion, and adding water to adjust the total solids concentration of the blend to 30% by mass. The aqueous dispersion was prepared by mixing 2 parts by mass of Type 2 zinc oxide, 2 parts by mass of a butylated reaction product of p-cresol and dicyclopentadiene (product name "Nocrac PBK", manufactured by Ouchi Shinko Chemical Industry Co., Ltd.), 2 parts by mass of dibutyldithiocarbamate (product name "Nocrac BZ", manufactured by Ouchi Shinko Chemical Industry Co., Ltd.), 1 part by mass of sulfur, 0.1 part by mass of sodium salt of β-naphthalenesulfonic acid formalin condensate (product name "Demol N", manufactured by Kao Corporation) and 10.7 parts by mass of water at 20°C for 16 hours using a ceramic ball mill. The obtained chloroprene-based polymer latex composition contains, relative to 100 parts by mass of the solid content of the chloroprene-based polymer latex, 2 parts by mass of Type 2 zinc oxide, 2 parts by mass of a butylated reaction product of p-cresol and dicyclopentadiene (product name "Nocrac PBK", manufactured by Ouchi Shinko Chemical Industry Co., Ltd.), 2 parts by mass of dibutyldithiocarbamic acid (product name " Nocrac BZ", manufactured by Ouchi Shinko Chemical Industry Co., Ltd.), 1 part by mass of sulfur, 0.1 part by mass of a sodium salt of β-naphthalenesulfonic acid formalin condensate (product name "Demol N", manufactured by Kao Corporation), and water.

A ceramic hand-shaped 7.5 size surgical glove mold (manufactured by Shinko Co., Ltd.) was immersed for 1 second in a coagulation liquid containing 62 parts by mass of water, 35 parts by mass of calcium nitrate tetrahydrate, and 3 parts by mass of calcium carbonate, and then removed. After drying for 3 minutes, the mold was immersed for 2 minutes in the chloroprene-based polymer latex composition prepared by the above-mentioned procedure. The mold was then washed with running water at 45°C for 1 minute and dried at 150°C for 60 minutes to prepare a glove-shaped dip-molded film for texture evaluation. The same procedure was also used, with a ceramic cylindrical mold having an outer diameter of 50 mm, to prepare a dip-molded film for tensile property evaluation.

<Tensile properties>

(Film thickness)

The thickness (film thickness) of the dip-molded film for tensile property evaluation was measured at three points in the center of the film using a test piece thickness gauge (manufactured by Kobunshi Keiki Co., Ltd., product name: ASKER SDA-12), and the minimum thickness was obtained as the thickness of the film for evaluation. The results are shown in Table 1.

(Measurement of tensile property)

Using the dip-molded film for tensile property evaluation, the modulus at 100% elongation and the tensile strength at cut were measured in accordance with JIS K 6251. The results are shown in Table 1.

< Evaluation of texture of glove-shaped dip-molded product>

Five subjects were asked to touch the obtained dip-molded product (glove-shaped film) and evaluate the texture of the dip-molded product by touching the surface condition, and by stretching and folding it. Evaluation was performed according to the following criteria, and the average of each subject's evaluation was rounded to the nearest value.

(Texture evaluation criteria)

3: Extremely soft and pleasant to the touch, with excellent texture
2: Soft, with no practical issues to the touch, with good texture
1: Not very soft, felt a bit hard to the touch, with poor texture

Table 1

| Table 1 | | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|---|---|
| Chloroprene-based polymer | Name of samples | | | I | II | III | IV | v | VI | VII | VIII | a | IX | X | XI |
| | Dynamic viscoelasticity | tanδ at 10Hz | - | 0.121 | 0.135 | 0.102 | 0.082 | 0.121 | 0.136 | 0.081 | 0.120 | 0.060 | 0.151 | 0.065 | 0.069 |
| | Peak with a weight average molecular weight of 5,000 to 50,000 | | g/mol | 18,753 | 8,219 | 27,434 | 45,476 | 17,975 | 18,753 | 18,753 | 18,753 | - | 18,512 | - | - |
| | Content ratio of 2,3-dichloro-1,3-butadiene | | % by mass | 10.9 | 10.9 | 10.9 | 10.9 | 0.0 | 10.9 | 10.9 | 10.9 | 10.8 | 11.0 | 0.0 | 10.2 |
| Dip-molded film | Film thickness | | mm | 0.20 | 0.19 | 0.21 | 0.20 | 0.19 | 0.21 | 0.18 | 0.20 | 0.19 | 0.21 | 0.18 | 0.20 |
| | Tensile properties | Modulus at 100% elongation | MPa | 0.47 | 0.43 | 0.49 | 0.65 | 0.61 | 0.43 | 0.64 | 0.49 | 0.85 | 0.39 | 0.54 | 0.51 |
| | | Tensile strength at cut | MPa | 18.7 | 18.2 | 19.0 | 19.5 | 19.8 | 17.4 | 20.6 | 20.5 | 26.1 | 11.1 | 22.8 | 19.1 |
| | Texture of dip-molded film | | | 3 | 3 | 3 | 2 | 2 | 2 | 2 | 3 | 1 | 2 | 1 | 1 |

**Claims**

1. A chloroprene-based polymer, wherein:

   a film containing the chloroprene-based polymer has a loss tangent tan δ in a 10 Hz frequency region of 0.08 to 0.14, obtained by tensile dynamic viscoelasticity measurement in accordance with a non-resonant forced vibration method, under conditions of a temperature of 25°C and a strain of 0.75%,
   the film is obtained by drying a chloroprene-based polymer latex containing the chloroprene-based polymer at 23°C for 3 days.

2. The chloroprene-based polymer of Claim 1, wherein a peak with a weight average molecular weight of 5,000 to 80,000 is detected, when a tetrahydrofuran-soluble content of the chloroprene-based polymer is measured by gel permeation chromatography.

3. The chloroprene-based polymer of Claim 1 or 2, wherein the chloroprene-based polymer contains a monomer unit derived from 2,3-dichloro-1,3-butadinene.

4. A dip-molded product containing the chloroprene-based polymer of any one of Claims 1 to 3.

5. The dip-molded product of Claim 4, wherein the dip-molded product is an industrial or general household glove, a medical glove, a balloon, a catheter, or a boot.

**INTERNATIONAL SEARCH REPORT**

International application No.
**PCT/JP2023/011785**

**A. CLASSIFICATION OF SUBJECT MATTER**

***C08L 11/02***(2006.01)i; ***C08F 36/18***(2006.01)i; ***C08F 236/18***(2006.01)i
FI: C08L11/02; C08F36/18; C08F236/18

According to International Patent Classification (IPC) or to both national classification and IPC

**B. FIELDS SEARCHED**

Minimum documentation searched (classification system followed by classification symbols)

C08L11/02; C08F36/18; C08F236/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-143002 A (TOSOH CORP) 29 August 2019 (2019-08-29)<br>tables 1-2, examples, comparative examples, etc. | 1-5 |
| A | JP 7-292165 A (DENKI KAGAKU KOGYO KK) 07 November 1995 (1995-11-07) | 1-5 |
| A | WO 2014/017216 A1 (DENKI KAGAKU KOGYO KK) 30 January 2014 (2014-01-30) | 1-5 |
| A | WO 2012/070347 A1 (DENKI KAGAKU KOGYO KK) 31 May 2012 (2012-05-31) | 1-5 |
| P, X | WO 2022/202254 A1 (DENKA COMPANY LTD) 29 September 2022 (2022-09-29)<br>tables 1-3, examples 5-7, comparative examples 1, 3, 5, etc. | 1-5 |
| P, X | WO 2022/202556 A1 (DENKA COMPANY LTD) 29 September 2022 (2022-09-29)<br>tables 2-3, example 7, comparative example 5, etc. | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/011785**

| Patent document cited in search report | Publication date (day/month/year) | Patent family member(s) | Publication date (day/month/year) |
|---|---|---|---|
| JP 2019-143002 A | 29 August 2019 | (Family: none) | |
| JP 7-292165 A | 07 November 1995 | US 5523355 A | |
| | | EP 679683 A1 | |
| WO 2014/017216 A1 | 30 January 2014 | US 2015/0183900 A1 | |
| | | EP 2878605 A1 | |
| | | CN 104470958 A | |
| WO 2012/070347 A1 | 31 May 2012 | US 2013/0245202 A1 | |
| | | EP 2644625 A1 | |
| | | CN 103228679 A | |
| | | KR 10-2013-0133796 A | |
| WO 2022/202254 A1 | 29 September 2022 | (Family: none) | |
| WO 2022/202556 A1 | 29 September 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014114342 A
- WO 2019009038 A
- JP 2019143002 A
- WO 2021132460 A
- JP 2017508840 A
- JP 2020189963 A